# DEMANDE DE BREVET EUROPEEN

(11) **EP 1 011 223 A1**
(43) Date de publication de la demande: **21.06.2000**
(21) Numéro de dépôt: 99403106.0
(22) Date de dépôt: 10.12.1999
(51) Int. Cl.: H04L 9/32, H04L 9/08

(54) **Procédé de création et gestion d'au moins une clé cryptographique et système pour sa mise en oeuvre**

(30) Priorité: 15.12.1998 FR 9815800
(71) Demandeur: BULL S.A., 78434 Louveciennes Cedex (FR)
(72) Inventeur: Courteaux, Brigitte, 92500 Rueil Malmaison (FR); Lebastard, Jacques, 78330 Fontenay Le Fleury (FR); Calvez, Pierre, 92500 Rueil Malmaison (FR)

(57) **Abrégé**

La présente invention concerne un procédé de création et de gestion de paires de clés cryptographiques asymétriques et/ou de certificats associés aux paires de clés, chaque paire de clés et certificat associé étant destinés à un objet géré par un système informatique (1). Le procédé consiste à créer une requête unitaire de création et/ou de certification d'au moins une paire de clés pour un objet du système qui est dépourvu de paire de clés ou de certificat pour sa paire de clés.

La présente invention concerne également le système informatique de mise en oeuvre dudit procédé.

## Description

La présente invention concerne le domaine des systèmes informatiques sécurisés et plus particulièrement des clés cryptographiques. Elle se rapporte à un procédé de création et de gestion d'au moins une clé cryptographique et du certificat associé dans le cas d'une paire de clés cryptographiques asymétriques ainsi qu'à un système informatique pour sa mise en oeuvre.

### L'art antérieur

La cryptographie permet de sécuriser et protéger l'accès aux documents électroniques par la mise en oeuvre de fonctions de chiffrement et de signature.

Le chiffrement est la transformation de données (texte en clair) dans une forme illisible (texte chiffré) pour une personne qui ne connaît pas la méthode de déchiffrement, grâce à une fonction paramétrable, appelée la clé de chiffrement. Inversement, il est indispensable de disposer de la clé de déchiffrement pour transformer un texte chiffré en un texte en clair.

La signature est un moyen d'authentification permettant au destinataire de vérifier la source et l'intégrité d'un message reçu. Elle utilise également le principe de clés évoqué ci-dessus.

Dans un environnement multi-usagers, le chiffrement et la signature augmentent la sécurité des communications sur des lignes non protégées, comme par exemple Internet.

On connaît des systèmes informatiques sécurisés dans lesquels les clés de chiffrement sont créées de manière individuelle par un administrateur, éventuellement sur initiation d'un utilisateur. Ainsi, lorsqu'un nouvel utilisateur souhaite intégrer le système sécurisé et disposer de clés, il requiert la création d'une ou plusieurs clés auprès de l'administrateur. A réception de la requête, l'administrateur conçoit une clé pour l'utilisateur en question.

Il en résulte une complexité accrue lorsque le nombre d'utilisateurs augmente, et en conséquence un délai d'attente important pour obtenir une clé de chiffrement. L'utilisateur intégrant un système sécurisé est contraint d'attendre pour obtenir une clé et communiquer de manière sécurisée dans ledit système.

La présente invention concerne plus particulièrement le domaine de la cryptographie à clés symétriques, ainsi que le domaine de la cryptographie à clés asymétriques.

Une clé est symétrique lorsqu'elle est utilisée pour générer et déchiffrer du texte chiffré.

Les clés asymétriques sont appelées clés publique/privée : la clé utilisée pour chiffrer l'information est différente de celle utilisée pour la déchiffrer. La clé publique est véhiculée dans un certificat. Le certificat est obtenu auprès d'une autorité de certification (CA, Certification Authority).

La certification d'une clé publique par une autorité de certification extérieure au système sécurisé concerné accroît la complexité dans la gestion des utilisateurs et de leurs clés et certificats. De plus, le système sécurisé communique très souvent avec l'autorité de certification dans un mode non-connecté ce qui augmente le degré de complexité.

L'utilisateur n'a pas connaissance du degré d'avancement de la création et de la certification de ses clés et notamment d'un éventuel blocage susceptible de survenir au cours de celles-ci.

Le certificat présente une période de validité suite à laquelle il doit être renouvelé. L'utilisateur qui ne surveille pas le délai d'expiration de son certificat, peut se retrouver dans l'impossibilité d'utiliser sa clé publique. Lorsque le certificat de sa clé publique n'est plus valide, l'utilisateur doit demander une nouvelle certification et est contraint d'attendre la délivrance d'un certificat par l'autorité de certification avant de pouvoir à nouveau communiquer de manière sécurisée dans le système.

Lorsqu'un utilisateur soupçonne une prise de connaissance par un tiers de sa clé privée ou encore lorsqu'un utilisateur change de nom ou d'autorité de certification, l'utilisateur peut demander la révocation du certificat de sa paire de clés.

L'autorité de certification révoque le certificat sur demande de l'utilisateur concerné et l'utilisateur peut alors soit demander un nouveau certificat soit une nouvelle paire de clés et un nouveau certificat associé.

Comme pour la création de clés, la certification et plus particulièrement la communication avec l'autorité de certification est de plus en plus difficile à gérer pour un administrateur lorsque le nombre d'utilisateurs du système augmente.

Un but de la présente invention est de simplifier la procédure de création de paires de clés et de certification des clés publiques et de réduire le délai d'obtention d'une paire de clés et/ou d'un certificat.

Un autre but de l'invention est de simplifier la certification dans un système communiquant avec une autorité de certification dans un mode asynchrone.

Un autre but de l'invention est de connaître le degré d'avancement de la procédure de création d'une paire de clés ainsi que celle de certification.

Un autre but de l'invention est de faciliter le renouvellement des certificats expirés ainsi que des paires de clés dont le certificat a été révoqué.

### Résumé de l'invention

Dans ce contexte, la présente invention propose un procédé de création et de gestion de paires de clés cryptographiques asymétriques et certificats associés, chaque paire de clés étant destinée à un sujet géré par un système informatique, caractérisé en ce qu'il consiste à :
- rechercher dans des moyens de mémorisation au moins un sujet pour lequel une paire de clés asymétriques et un certificat associé doivent être créés ;
- créer au moins une requête unitaire de création et de certification d'une paire de clés asymétriques pour ledit sujet ;
- transmettre ladite requête unitaire de création et de certification à un centre de génération de clés qui délivre une paire de clés asymétriques conformément à ladite demande ;
- créer au moins une requête unitaire de certification de la clé publique créée pour ledit sujet ;
- transmettre ladite requête unitaire de certification à une autorité de certification qui délivre un certificat conformément à ladite demande.

La présente invention propose également un procédé de création et de gestion de certificats de clés publiques, chaque certificat étant destiné à une clé publique d'un sujet géré par un système informatique, caractérisé en ce qu'il consiste à :
- rechercher dans des moyens de mémorisation au moins une paire de clés asymétriques pour la clé publique de laquelle un certificat doit être créé ;
- créer au moins une requête unitaire de certification de la clé publique ;
- transmettre ladite requête unitaire de certification à une autorité de certification qui délivre un certificat conformément à ladite demande.

La présente invention se rapporte également à un procédé de création et de gestion de clés cryptographiques symétriques, chaque clé étant destinée à un sujet géré par un système informatique, caractérisé en ce qu'il consiste à :
- rechercher dans des moyens de mémorisation au moins un sujet pour lequel une clé symétrique doit être créée ;
- créer au moins une requête unitaire de création d'une clé symétrique pour ledit sujet ;
- transmettre une demande correspondant à ladite requête unitaire de création à un centre de génération de clés qui délivre une clé symétrique conformément à ladite demande.

La présente invention porte également sur un système informatique permettant de créer et gérer des paires de clés cryptographiques asymétriques et/ou des certificats associés aux paires de clés, les paires de clés et les certificats étant destinés à un sujet géré par ledit système, caractérisé en ce qu'il comprend des moyens permettant d'automatiser la création et/ou la certification d'au moins une paire de clés pour chaque sujet géré par le système.

La présente invention propose également un système informatique permettant de créer et gérer des clés cryptographiques symétriques, les clés étant destinés à un sujet géré par ledit système, caractérisé en ce qu'il comprend des moyens permettant d'automatiser la création d'au moins une clé pour chaque sujet géré par le système.

### Présentation des figures

D'autres caractéristiques et avantages de l'invention apparaîtront à la lumière de la description qui suit, donnée à titre d'exemple illustratif et non limitatif de la présente invention, en référence aux dessins annexés dans lesquels:
- la figure 1 est un schéma simplifié global du système informatique selon la présente invention ;
- la figure 2 représente une unité organisationnelle sous la forme d'un arbre ;
- la figure 3 représente un schéma d'étapes du procédé selon une forme de réalisation de la présente invention appliqué à une partie de l'unité organisationnelle représentée sur la figure 2.

### Description d'une forme de réalisation de l'invention

La forme de réalisation de l'invention décrite ci-après se rapporte à la création et à la gestion de paires de clés cryptographiques asymétriques et des certificats associés. Le principe de l'invention est également applicable à la création et à la gestion de clés cryptographiques symétriques.

Les principes de la cryptographie à clés publique/privée sont ci-après brièvement rappelés.

Chaque utilisateur possède un couple de clés asymétriques, une clé publique et une clé privée.

La clé privée est personnelle, connue et conservée secrète par le seul détenteur légitime de cette clé qui l'utilise pour déchiffrer des messages reçus ou pour signer des messages. La clé publique est rendue publique : elle est connue de tous et utilisée pour chiffrer des documents ou pour vérifier des signatures. Pour signer un document, un utilisateur utilise sa clé privée: la clé privée étant secrète, ledit utilisateur peut seul signer un document à l'aide de ladite clé. Quiconque peut vérifier la signature dudit utilisateur à l'aide de la clé publique dudit utilisateur. Pour chiffrer un document, quiconque peut utiliser la clé publique d'un utilisateur. Ledit utilisateur déchiffre le document à l'aide de sa clé privée qu'il est le seul à connaître.

Il est nécessaire de prévoir un système qui permette de vérifier qu'une clé publique donnée soit effectivement associée au détenteur légitime et que c'est bien lui qui l'utilise.

Ce problème a donné naissance aux certificats. Un certificat est un document numérique attestant de la propriété d'une clé publique par une personne. Un tel certificat doit être émis par une institution reconnue, appelée autorité de certification (CA). Le certificat permet au titulaire de prouver à tous que la clé publique associée à ce certificat lui appartient et qu'il pourra déchiffrer les messages que toute personne lui enverra en utilisant cette clé publique. Lorsqu'une personne signe et émet un document, le destinataire obtient le certificat de la personne émettrice. Le destinataire peut vérifier la véracité du certificat avec le certificat de l'autorité de certification ; il peut ensuite contrôler la signature de l'émetteur.

Un certificat comprend en général les éléments suivants :
■ la clé publique ;
■ le nom du propriétaire ;
■ la date d'expiration du certificat ;
■ le nom de l'autorité de certification ;
■ le numéro de série du certificat ;
■ la signature de l'autorité de certification.

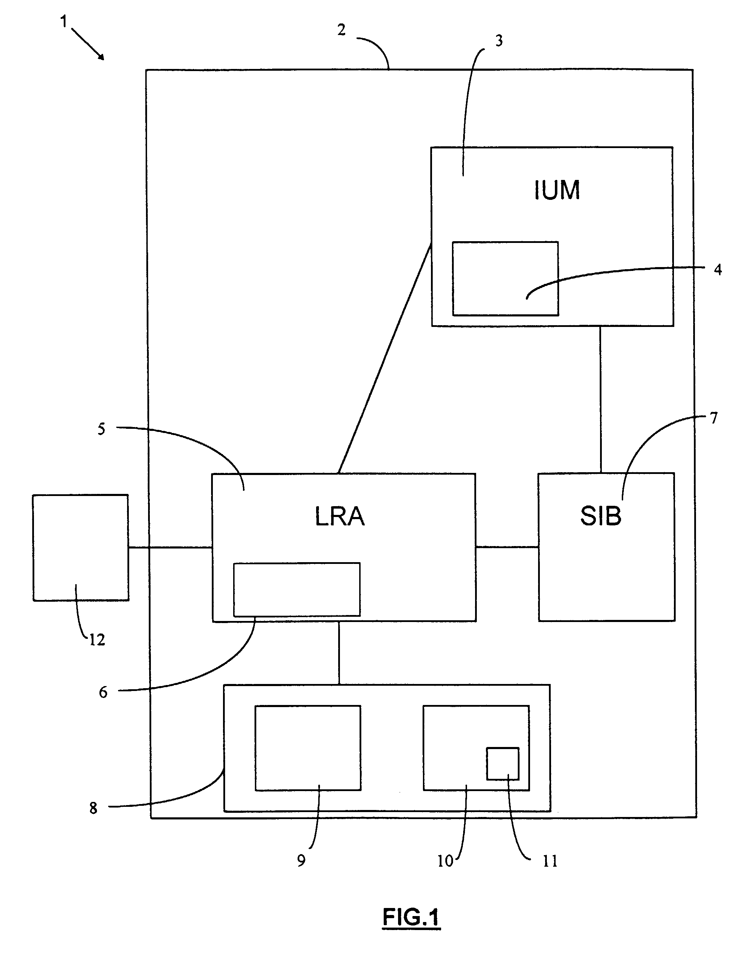

Comme représenté sur la figure 1, le système informatique 1 selon la présente invention comporte un serveur 2 ou une station de travail ou tout autre moyen équivalent de type connu. Le serveur 2 comprend au moins :
- un service central d'administration 3, IUM (Integrated User Management). Le service central d'administration 3 comporte une interface homme/machine 4 ;
- une autorité locale d'enregistrement 5 (LRA, Local Registration Authority) comprenant un mécanisme 6 de réveil périodique destiné à activer périodiquement l'autorité locale d'enregistrement 5 ;
- une base de sécurité centrale 7 de référence (SIB, Security Information Base) ;
- un centre de génération de clés 8 comprenant un serveur de clés 9 et un générateur de clés 10. Le générateur de clés 10 comporte des moyens de stockage 11 consistant en un espace mémoire ou un disque dur ou tout autre moyen de mémorisation équivalent de type connu.

Le système informatique 1 dispose également d'au moins une autorité de certification (CA) 12.

Selon une autre forme de réalisation de l'invention, le serveur ne contient pas le centre de génération de clés 8. Le système informatique 1 dispose d'un centre de génération de clés 8 extérieur au serveur 2. Il est par exemple possible que l'autorité de certification 12 dispose d'un centre de génération de clés 8 utilisé par le système 1 pour la création de ses clés.

Le service central d'administration 3 est un processus lancé sur la demande d'un administrateur ou utilisateur.

L'autorité locale d'enregistrement 5, le mécanisme 6 de réveil périodique, le serveur de clés 9 et le générateur de clés 10 sont des démons travaillant en tâche de fond.

Au sens de la présente description, un démon est un processus qui est créé au lancement du système ou à des dates fixées par l'administrateur du système et qui ne sont interrompus qu'à l'arrêt du système. Un processus est un programme en cours d'exécution à un instant donné, le programme constituant en lui-même un objet inerte rangé dans un espace mémoire réservé ou équivalent. Il correspond à un partage logique du travail dans le système d'exploitation du serveur 2. L'activité sur un système est générée par les processus. Des espaces mémoires ou tout autre moyen de mémorisation de type connu sont réservés pour la mémorisation des programmes correspondant aux démons mentionnés ci-dessus.

La base de sécurité centrale 7 est une base de données relationnelle, une base de données objet, un annuaire ou tout autre moyen de mémorisation et classement de données.

L'autorité de certification 12 consiste dans la forme de réalisation décrite en une station de travail distante, un serveur distant ou tout autre moyen équivalent susceptible de fonctionner en mode hors-ligne (déconnectée du serveur 2) ou en mode en-ligne (connectée au serveur 2). Les échanges entre le serveur 2 et l'autorité de certification 12 sont sécurisés ; l'autorité locale d'enregistrement 5 et l'autorité de certification 12 possèdent notamment chacune une paire de clés leur permettant de signer leurs échanges.

Les échanges entre l'autorité locale d'enregistrement 5 et le centre de génération de clés 8 sont sécurisés : ils appartiennent au même serveur 2 et utilisent un protocole propriétaire spécifique au serveur 2 pour dialoguer.

Le système informatique 1 selon la présente invention manipule les objets suivants :
- unité géographique / unité organisationnelle ;
- utilisateur ;
- application ;
- autorité de certification ;
- modèle de paire de clés ;
- modèle de certificat ;
- extension de certificat ;
- requête multiple de création et certification de paires de clés ;
- paire de clés ;
- requête multiple de certification de clés publiques ;
- certificat.

Selon une forme de réalisation particulière de l'invention, le système manipule également l'objet :
- requête de révocation de certificat.

Les objets utilisateurs et applications sont également appelés sujets. Chaque objet ou sujet comporte des attributs le caractérisant.

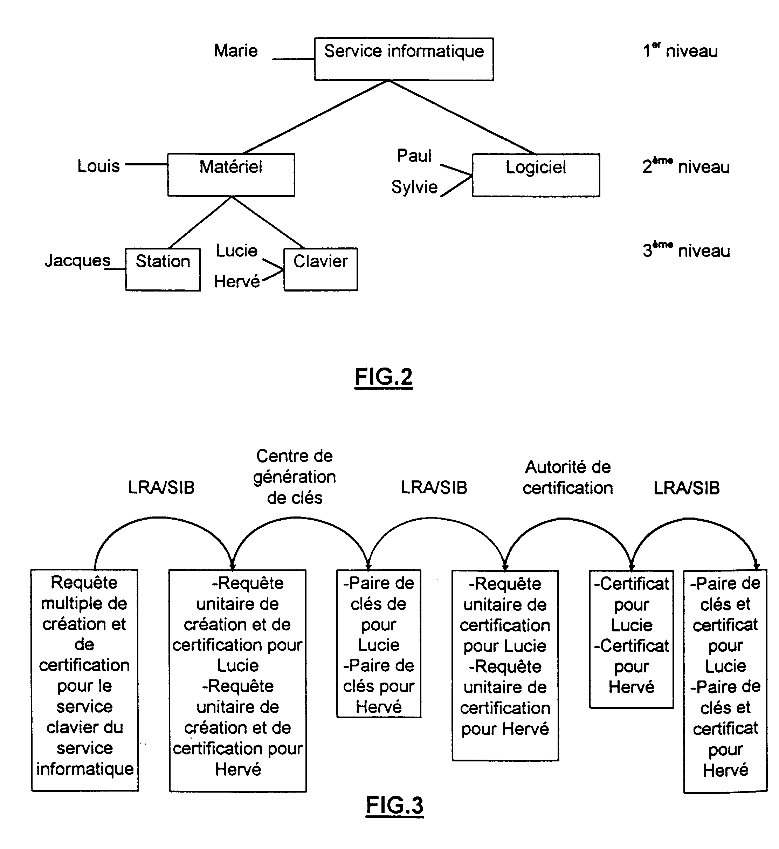

Les objets unité géographique, unité organisationnelle sont destinés à décrire des utilisateurs ou des applications suivant des critères géographiques ou organisationnels ; tout autre type de critère pour définir un ensemble d'utilisateurs ou d'applications est susceptible d'être utilisé. La figure 2 représente un exemple d'unité organisationnelle sous la forme d'un arbre. Dans cet exemple, l'unité organisationnelle se rapporte à un service informatique d'une entreprise. L'objet unité géographique, unité organisationnelle comprend comme attributs, les requêtes multiples de création et de certification de paires de clés et les requêtes multiples de certification de clés publiques.

Les sujets utilisateur et application représentent respectivement une personne physique et une application, toutes deux utilisatrices de paires de clés. Sur la figure 2, Marie, Louis, Jacques... sont des sujets utilisateurs (personne physique). Les sujets utilisateur et application contiennent des attributs présentant les informations nécessaires pour leur identification dans l'objet certificat tels qu'un nom conforme à la norme RFC 822, des informations pour l'extension de certificats définies par l'administrateur. Le sujet utilisateur et application a également pour attributs des paires de clés et des requêtes multiples de création et de certification. Un sujet peut disposer de plusieurs paires de clés, chaque paire de clés correspondant à une utilisation spécifique différente, par exemple une paire de clés destinée au chiffrement et une paire de clés destinée à la signature.

L'objet autorité de certification représente l'autorité de certification 12 qui certifie des clés publiques et émet des certificats avec des extensions et qui révoque également des certificats sur demande d'un utilisateur ou d'un administrateur. Le format de certificat reconnu de nos jours est défini par la recommandation X.509 V3 du CCITT. Les certificats peuvent être lus ou écrits par n'importe quel logiciel compatible X.509. Les attributs de l'objet autorité de certification sont le nom et l'adresse de l'autorité concernée, les modèles de certificat émis par l'autorité, les certificats émis par l'autorité, le certificat de l'autorité de certification en question.

L'objet modèle de paire de clés a pour attribut l'algorithme à utiliser avec la paire de clés, la longueur des clés, les requêtes multiples de création et de certification, et l'utilisation possible de la paire de clés, par exemple la signature de données, le chiffrement de clés ou la signature de certificats. Il permet de définir une famille de paires de clés utilisées par des sujets d'une même unité géographique, organisationnelle ou autre et de construire ainsi une requête multiple pour une unité donnée comme il sera vu plus loin.

L'objet modèle de certificat a pour attribut l'autorité de certification, la durée de validité, les extensions, les requêtes multiples de création et de certification, les requêtes multiples de certification. Un sujet peut disposer de plusieurs certificats issus d'autorités de certification différentes pour une même paire de clés. L'objet modèle de certificat permet de définir une famille de certificats utilisés par des sujets d'une même unité géographique, organisationnelle ou autre et de construire ainsi une requête multiple pour une unité donnée comme il sera vu plus loin.

L'objet extension définit des données supplémentaires introduites dans le certificat. L'objet extension comprend comme attributs un identifiant, un drapeau indiquant si l'extension est critique ou non, des attributs d'objets qui contiendront les données à introduire dans l'extension, une règle d'encodage permettant d'encoder les données introduites dans le certificat. Les attributs d'objets qui contiendront les données à introduire dans l'extension peuvent être choisis parmi les attributs des sujets, modèle de certification, autorité de certification, requête multiple de certification ou extension. L'objet extension comprend comme également comme attribut les modèles de certificat.

Ainsi, par exemple, l'extension d'un certificat peut contenir un identifiant particulier, un drapeau non critique, l'âge d'un utilisateur et une règle d'encodage.

L'objet requête multiple de création et de certification de clés publiques comporte un attribut définissant un ensemble de sujets utilisateurs de clés. Les sujets de l'ensemble sont soit nommés explicitement, soit recherchés à partir de critères préfixés tels que des critères géographiques ou organisationnels. Ainsi, par exemple, l'ensemble dans la requête multiple relative au service informatique dans la figure 2 est défini sous la forme d'un arbre. Il est également possible de concevoir une requête multiple par niveau et de nommer explicitement tous les utilisateurs pour le niveau en question. Par exemple, l'ensemble d'une requête multiple pour la sous-unité clavier comprend les utilisateurs nommés explicitement Hervé et Lucie ou déterminés selon des critères organisationnels, à savoir tous les sujets appartenant à la sous-unité clavier. L'objet requête multiple de création et de certification de paire de clés a également pour attributs le modèle de paire de clé et le modèle de certificat à utiliser, des informations permettant de savoir dans quelles conditions il est nécessaire de créer des clés (absence de clés pour un utilisateur et de requête unitaire de création et de certification correspondante, création demandée par un administrateur, révocation d'un certificat et création demandée suite à cette révocation). De même, il comprend un attribut de planification. L'attribut de planification indique d'une part, la date à partir de laquelle doit être exécutée la requête multiple concernée et d'autre part, si la requête doit être exécutée une seule fois. Si l'attribut de planification révèle que la requête de certification ne doit pas être exécutée une seule fois, la requête est exécutée à chaque appel par le système et plus précisément par le mécanisme de réveil périodique 6 jusqu'à l'arrêt du système. L'objet requête multiple comporte également un attribut relatif à l'état d'avancement de la création. L'attribut relatif à l'état d'avancement de la création présente des valeurs telles que « en attente », « en cours de traitement », « émission d'une demande de création », « terminé », « traitement terminé avec un message d'erreur ».

L'objet requête unitaire de création et de certification de paire de clés correspond à l'objet requête multiple dans lequel un unique sujet est identifié.

L'objet paire de clés contient comme attributs le propriétaire de la paire de clés, les valeurs des clés publique et privée, l'algorithme à utiliser avec les paires de clés, la longueur des clés, le type d'utilisation des clés, la date de création des clés, les certificats associés, les requêtes multiples de certification. Plusieurs certificats émis par des autorités de certification différentes peuvent être associés à une même paire de clés.

L'objet requête multiple de certification de clés publiques a pour attribut un ensemble de clés publiques à certifier appartenant à des sujets nommés explicitement ou définis par des critères géographiques, organisationnels ou autres. L'objet requête multiple de certification de clés publiques comporte également comme attributs le modèle de certificat à utiliser, des informations permettant de savoir dans quelles conditions il est nécessaire de certifier une clé comme par exemple l'absence de certificat et de requête unitaire de certification, la certification demandée par un administrateur, l'expiration du délai de validité du certificat, la révocation d'un certificat d'une paire de clés et certification demandée pour ladite paire de clés que l'utilisateur souhaite conserver suite à la révocation... La requête multiple est exécutée de préférence avant que le certificat concerné n'arrive à expiration. Ainsi, il est prévu dans la forme de réalisation décrite de certifier toutes les clés publiques dont le certificat arrive à expiration dans la période d'activation de l'autorité locale d'enregistrement 5. La période d'activation de l'autorité locale d'enregistrement par le mécanisme 6 de réveil périodique présente par exemple une durée double à celle requise en moyenne par l'autorité de certification pour émettre un certificat. Si, par exemple, l'autorité de certification met en moyenne cinq jours pour certifier une clé publique, la période d'activation de l'autorité locale d'enregistrement est de dix jours : ainsi, si un certificat arrive à expiration sept jours après l'activation de l'autorité locale d'enregistrement par le mécanisme 6, ledit certificat arrive à expiration dans la période d'activation de dix jours de l'autorité locale d'enregistrement : un nouveau certificat doit être demandé auprès de l'autorité de certification. Si l'autorité de certification met par exemple cinq jours pour émettre ce nouveau certificat, un nouveau certificat sera prêt cinq jours après l'activation de l'autorité locale d'enregistrement et deux jours avant l'expiration de l'ancien certificat. L'utilisateur concerné aura donc toujours à sa disposition un certificat: le renouvellement sera transparent pour lui. L'objet requête multiple de certification de clés publiques contient également un attribut relatif à l'état d'avancement de la certification. L'attribut relatif à l'état d'avancement de la certification présente des valeurs, par exemple les valeurs « en attente », « en cours de traitement », « émission d'une demande de certification », « terminé », « traitement terminé avec un message d'erreur ».

L'objet requête unitaire de certification de clés publiques correspond à l'objet requête multiple dans lequel une unique clé publique et donc une unique paire de clés est identifiée.

L'objet certificat a pour attributs le propriétaire du certificat, la paire de clés associée, l'autorité de certification émettrice, la valeur du certificat et le délai de validité.

S'il est prévu un objet requête de révocation de certificat, ledit objet comprend les attributs suivants : les certificats et/ou l'autorité de certification concernés, l'état d'avancement, la cause de la révocation (soupçon d'un utilisateur sur la prise de connaissance de sa clé par un tiers, changement d'identité du propriétaire). La requête de révocation indique également si une paire de clés doit être créée suite à ladite révocation ou si la paire de clés dont le certificat a été révoqué doit être conservée et certifier à nouveau. Le traitement de la révocation ne sera pas décrit ci-après mais le principe à base de requête adaptée est le même que pour la création et la certification.

Tous les objets et sujets ainsi que les liens entre eux sont stockés dans la base de sécurité centrale 7. Chaque objet et sujet dans la base de sécurité centrale 7 disposent d'une identification unique et sont accessibles pour l'administrateur à partir de l'interface homme/machine 4.

L'autorité locale d'enregistrement 5 est représentée dans la base de sécurité centrale 7 sous la forme d'un sujet de type application. L'autorité locale d'enregistrement 5 dispose d'une paire de clés enregistrée dans la base 7 à l'installation du système selon l'invention. La paire de clés de l'autorité locale d'enregistrement 5 est utilisée pour sécuriser les échanges entre l'autorité locale d'enregistrement 5 et l'autorité de certification 12. L'autorité de certification 12 dispose également d'une paire de clés pour protéger ses échanges avec l'autorité locale d'enregistrement 5.

Selon une forme de réalisation particulière de l'invention, seule la clé publique est enregistrée dans la base de sécurité centrale. L'objet paire de clés ne contient que la valeur de la clé publique. La clé privée peut être par exemple intégrée à une carte à puce.

L'administrateur du système 1 saisit à l'aide de l'interface homme/machine 4 des informations propres à l'environnement dans lequel le système 1 est intégré. L'administrateur définit les sujets concernés par exemple selon des critères géographiques ou organisationnels ou autres. Il déclare les modèles de certificats, les modèles de paires de clés, les autorités de certification, les extensions de certificat. Il définit des requêtes multiples de création et de certification et des requêtes multiples de certification pour des ensembles de sujets notamment tels que définis précédemment. Le service central d'administration 3 crée les objets ou sujets correspondant en définissant leurs attributs à partir des informations spécifiques saisies. Les objets et sujets créés sont stockés dans la base de sécurité centrale 7.

Il est également possible d'importer par programme des objets ou sujets tels que par exemple le sujet utilisateur, ou l'objet paire de clé ou certificat et de les stocker dans la base de sécurité centrale 7 sous la forme telle que décrite précédemment.

La base de sécurité centrale 7 est gérée et mise à jour par le service central d'administration 3.

L'administrateur peut à tout moment saisir à l'aide de l'interface homme/machine 4 de nouveaux sujets, de nouvelles requêtes de création de paires de clés et/ou de nouvelles requêtes de certification, ou tout autre objet qui est ensuite stocké dans la base de sécurité centrale 7.

Le procédé selon la présente invention consiste à :
- rechercher dans la base de sécurité centrale 7 au moins un sujet pour lequel une paire de clés asymétriques et un certificat associé doivent être créés ;
- créer au moins une requête unitaire de création et de certification d'une paire de clés asymétriques pour ledit sujet ;
- transmettre une demande correspondant à ladite requête unitaire de création et de certification au centre de génération de clés 8 qui délivre une paire de clés asymétriques conformément à ladite demande ;
- créer au moins une requête unitaire de certification de la clé publique créée pour ledit sujet ;
- transmettre une demande correspondant à ladite requête unitaire de certification à l'autorité de certification 12 qui délivre un certificat conformément à ladite demande.

La recherche dans la base de sécurité centrale 7 est effectuée périodiquement. Le mécanisme de réveil périodique 6 active périodiquement l'autorité locale d'enregistrement 5. La période d'activation de l'autorité locale d'enregistrement 5 est susceptible d'être modifiée par l'administrateur.

Selon une forme de réalisation particulière de l'invention, l'autorité locale d'enregistrement 5 activée par le mécanisme de réveil périodique 6 recherche toutes les requêtes multiples de création et de certification de paires de clés stockées dans la base de sécurité centrale 7 dont l'attribut de planification correspond à une date d'exécution atteinte ou dépassée. L'autorité locale d'enregistrement 5 donne à l'attribut relatif à l'état d'avancement des requêtes multiples retrouvées la valeur « en attente ». Sur la figure 3, une requête multiple de création et de certification de l'unité clavier a été retrouvée.

Pour chacune des requêtes multiples de création et de certification retrouvée, l'autorité locale d'enregistrement 5 recherche tous les sujets concernés par la requête en question pour lesquels une paire de clés doit être créée et plus précisément pour lesquels une condition dans laquelle il est nécessaire de créer au moins une paire de clés est remplie (absence de paire de clés et de requête unitaire de création et de certification correspondante pour le sujet en question, révocation d'un certificat et création demandée suite à cette révocation). La condition « création demandée par un administrateur » n'est considérée que lorsqu'un administrateur demande la création immédiate d'une paire de clés au moyen de l'interface homme/machine comme il sera vu plus loin. Pour chaque sujet retrouvé, l'autorité locale d'enregistrement 5 crée une requête unitaire de création et certification de paire de clés à partir de la requête multiple concernée. L'autorité locale d'enregistrement 5 communique pour ce faire avec la base de sécurité centrale 7. Elle récupère dans la base de sécurité centrale 7 les informations dont elle a besoin pour construire chacune desdites requêtes unitaires et notamment le modèle de paire de clés et le modèle de certificat déterminés dans la requête multiple de création et de certification. Sur la figure 3, deux requêtes unitaires sont créés pour chaque utilisateur de l'unité clavier dépourvu de paire de clés, à savoir Hervé et Lucie. Elle donne à l'attribut relatif à l'état d'avancement de la requête unitaire en question la valeur « en cours de traitement ».

Pour un sujet donné, plusieurs requêtes unitaires de création et certification de paire de clés sont susceptibles d'être créées. Chaque requête unitaire correspond à une utilisation spécifique de la paire de clés (la signature de données, le chiffrement de clés ou la signature de certificats...) et donc à un modèle particulier de paire de clés. Chaque requête unitaire peut également correspondre à une autorité de certification déterminée et donc à un modèle particulier de certificat.

L'administrateur peut requérir à tout moment la création et la certification d'une paire de clés pour un sujet donné à partir de l'interface homme/machine 4: l'administrateur donne toutes les informations nécessaires à la création d'une requête unitaire de création et d'une requête unitaire de certification associée et notamment le modèle de paire de clés et le modèle de certificat ; l'autorité peut alors créer directement ladite requête unitaire de création et la requête de certification correspondante pour le sujet donné. Les conditions « création demandée par un administrateur » et « certification demandée par un administrateur » dans laquelle il est nécessaire de créer au moins une paire de clés et un certificat sont remplies. L'autorité locale d'enregistrement donne à l'attribut relatif au degré d'avancement de la requête unitaire en question la valeur « en cours de traitement ». Le procédé opère ensuite de la façon telle que décrite ci-après pour la requête de création et de certification unitaire issue d'une requête multiple.

Pour chaque requête de création et de certification unitaire créée, l'autorité locale d'enregistrement 5 émet une demande correspondante de paires de clés au centre de génération de clés 8 et plus particulièrement au serveur de clés 9. Le contenu de la demande de création correspond à celui de la requête de création et de certification unitaire ; seule sa structure est modifiée de manière à être adaptée aux moyens de communication utilisés entre l'autorité locale d'enregistrement 5 et l'autorité de certification 12.

La demande transmise, l'autorité locale d'enregistrement 5 donne à l'attribut de la requête de création et de certification unitaire relatif à l'état d'avancement de la création la valeur « émission d'une demande ».

Le générateur de clés 10 fabrique de manière continue des paires de clés selon des algorithmes et des tailles de clés déterminés et les stocke dans les moyens de stockage 11 du générateur.

Le serveur de clés 9, dès réception de la demande de l'autorité locale d'enregistrement 5, retire des moyens de stockage 11 du générateur de clés 10 une clé du type de celle définie dans la demande émise par l'autorité locale d'enregistrement 5. Le serveur de clés 9 transfère la paire de clés retirée vers l'autorité locale d'enregistrement 5.

Dans l'hypothèse où le générateur 10 ne parvient pas à créer une clé, il transmet un message d'erreur à l'autorité locale d'enregistrement 5. L'autorité locale d'enregistrement 5 modifie la valeur de l'attribut de la requête unitaire concernée relatif à l'état d'avancement de la création pour lui donner la valeur « traitement terminé avec un message d'erreurs ».

Sur réception de la paire de clés délivrée par le serveur de clés 9, l'autorité locale d'enregistrement 5 crée un objet « paire de clés » correspondant dans la base de sécurité centrale 7. L'autorité locale d'enregistrement 5 y stocke la paire de clés créée. Sur la figure 3, deux paires de clés sont stockées dans la base de sécurité locale 7, l'une pour Hervé et l'autre pour Lucie. L'autorité locale d'enregistrement 5 modifie la valeur de l'attribut relatif à l'état d'avancement de la création de la requête unitaire concernée pour lui donner la valeur « traitement terminé ».

L'autorité locale d'enregistrement 5 détruit la requête de création unitaire associée au sujet en question et crée une requête unitaire de certification de la clé publique créée correspondante.

L'autorité locale d'enregistrement 5 récupère dans la base de sécurité centrale 7 les informations dont elle a besoin pour construire chacune desdites requêtes unitaires de certification et notamment le modèle de certificat déterminé dans la requête multiple de création et de certification. Le modèle de certificat contient notamment l'autorité de certification et les extensions. A partir des extensions, l'autorité locale d'enregistrement 5 obtient les règles d'encodage permettant d'encoder les données à introduire dans le certificat. Elle applique ladite règle afin d'encoder chaque extension dans le certificat contenu dans la requête unitaire de certification en question. La condition « absence de certificat » dans laquelle il est nécessaire de créer au moins une paire de clés est remplie. L'autorité locale d'enregistrement 5 modifie la valeur de l'attribut de la requête unitaire concernée relatif à l'état d'avancement de la certification pour lui donner la valeur « en cours de traitement ». Dans l'exemple représenté sur la figure 3, deux requêtes unitaires de certification sont créées pour les deux clés publiques des paires de clés créées respectivement pour Hervé et Lucie. Pour un sujet donné, plusieurs requêtes unitaires de certification de paire de clés sont susceptibles d'être créées, chaque requête correspondant à une autorité de certification déterminée et donc à un modèle de certification particulier.

Les requêtes unitaires créées pour chaque sujet, l'autorité locale d'enregistrement 5 supprime dans la base de sécurité centrale 7 l'objet « requête multiple de création et de certification de paires de clés » concerné lorsque l'attribut de planification le requiert, c'est-à-dire lorsqu'il indique que la requête multiple concernée doit être exécutée une seule fois.

L'autorité locale d'enregistrement 5 émet une demande de certification par requête de certification unitaire créée vers l'autorité de certification 12 concernée. Le contenu de la demande de certification correspond à celui de la requête de certification unitaire ; seule sa structure est modifiée de manière à être adaptée aux moyens de communication utilisés pour connecter l'autorité locale d'enregistrement 5 à l'autorité de certification 12. La demande de certification est signée par la clé privée de l'autorité locale d'enregistrement 5 de manière à garantir l'origine de la demande. Le statut de chaque requête de certification est alors mis à jour ; l'autorité locale d'enregistrement 5 donne à l'attribut de la requête de certification unitaire relatif à l'état d'avancement de la procédure la valeur «émission d'une demande ». L'autorité de certification 12 stocke la demande. L'autorité de certification 12 est susceptible de produire à tout moment un certificat signé de sa clé privée. Le mode de connexion entre l'autorité de certification 12 et l'autorité locale d'enregistrement 5 est synchrone ou asynchrone. Dans un mode asynchrone, l'autorité locale d'enregistrement 5 comporte des moyens de traitement des certificats au fur et à mesure de leur réception. Sur réception du certificat concerné, l'autorité locale d'enregistrement 5 modifie la valeur de l'attribut de la requête unitaire concernée relatif à l'état d'avancement de la certification pour lui donner la valeur « traitement terminé ». L'autorité locale d'enregistrement 5 détruit la demande de certification unitaire concernée et crée un objet de type certificat dans la base de sécurité centrale 7. Dans l'exemple de la figure 3, deux certificats sont stockés respectivement pour Hervé et Lucie.

Dans l'hypothèse où l'autorité de certification 12 ne parvient pas ou refuse de créer un certificat, il transmet un message d'erreur à l'autorité locale d'enregistrement 5. L'autorité locale d'enregistrement 5 modifie la valeur de l'attribut de la requête unitaire concernée relatif à l'état d'avancement de la certification pour lui donner la valeur « traitement terminé avec un message d'erreurs ».

Les sujets enregistrés dans la base de sécurité centrale 7 et qui sont dépourvus de paires de clés, ou pour lesquels une paire de clés a été demandée par l'administrateur ou encore pour lesquels le certificat est révoqué et qu'une nouvelle paire de clés est demandée suite à cette révocation, sont à l'aide du procédé et du système selon l'invention munis automatiquement de paires de clés et certificats associés.

Le procédé selon la présente invention consiste également à :
- rechercher dans des moyens de mémorisation 7 au moins une paire de clés asymétriques pour la clé publique de laquelle un certificat doit être créé ;
- créer au moins une requête unitaire de certification de la clé publique ;
- transmettre une demande correspondant à ladite requête unitaire de certification à une autorité de certification 12 qui délivre un certificat conformément à ladite demande.

La recherche dans la base de sécurité centrale 7 est effectuée périodiquement. Le mécanisme de réveil périodique 6 active périodiquement l'autorité locale d'enregistrement 5. La période d'activation de l'autorité locale d'enregistrement 5 est susceptible d'être modifiée par l'administrateur.

Selon une forme de réalisation particulière de l'invention, l'autorité locale d'enregistrement 5 activée par le mécanisme de réveil périodique 6 recherche toutes les requêtes multiples de certification de clés publiques stockées dans la base de sécurité centrale 7 dont l'attribut de planification correspond à une date d'exécution atteinte ou dépassée. L'autorité locale d'enregistrement 5 donne à l'attribut relatif à l'état d'avancement de la requête multiple en question la valeur « en attente ».

Pour chacune des requêtes multiples de certification retrouvée, l'autorité locale d'enregistrement 5 recherche tous les sujets concernés par la requête en question pour lesquels une condition dans laquelle il est nécessaire de certifier au moins une paire de clés est remplie (absence de certificat et de requête unitaire de certification correspondante, expiration du délai de validité du certificat dans la période d'activation de l'autorité locale d'enregistrement 5, révocation du certificat). La condition « certification demandée par un administrateur » n'est considérée que lorsqu'un administrateur demande un nouveau certificat pour une paire de clés donnée au moyen de l'interface homme/machine comme il sera vu plus loin. Pour chaque sujet retrouvé, elle crée des requêtes unitaires de certification de paires de clés à partir des requêtes multiples de certification concernées. L'autorité locale d'enregistrement 5 communique pour ce faire avec la base de sécurité centrale 7. Elle récupère dans la base de sécurité centrale 7 les informations dont elle a besoin pour construire chacune desdites requêtes unitaires et notamment le modèle de certificat. La requête multiple indique le modèle de certificat à utiliser suivant l'ensemble dans lequel se trouve la paire de clés concernée. Le modèle de certificat contient notamment l'autorité de certification et les extensions. A partir des extensions, l'autorité locale d'enregistrement 5 obtient les règles d'encodage permettant d'encoder les données à introduire dans le certificat. Elle applique lesdites règles afin d'encoder les extensions dans le certificat contenu dans la requête unitaire de certification en question. L'autorité locale d'enregistrement 5 donne à l'attribut relatif à l'état d'avancement de la requête unitaire en question la valeur « en cours de traitement ».

Pour un sujet donné, plusieurs requêtes unitaires de certification de paire de clés sont susceptibles d'être créées. Chaque requête unitaire correspond à une autorité de certification déterminée et donc à un modèle particulier de certificat.

L'administrateur peut requérir à tout moment une certification d'une paire de clés donnée pour un sujet donné à partir de l'interface homme/machine 4: l'administrateur donne toutes les informations nécessaires à la création d'une requête unitaire et notamment le modèle de certificat ; l'autorité peut alors créer directement ladite requête unitaire de certification pour le sujet donné. La condition « certification demandée par un administrateur » dans laquelle il est nécessaire de créer au moins un certificat est remplie. Elle donne à l'attribut relatif au degré d'avancement de la requête unitaire en question la valeur « en cours de traitement ». Le procédé opère alors de la manière telle que décrite ci-après.

Les requêtes unitaires créées pour chaque sujet retrouvé, l'autorité locale d'enregistrement 5 supprime dans la base de sécurité centrale 7 l'objet « requêtes multiples de certification de paires de clés » lorsque l'attribut de planification le requiert, c'est-à-dire lorsqu'il indique que la requête multiple concernée doit être exécutée une seule fois.

L'autorité locale d'enregistrement 5 émet une demande de certification par requête de certification unitaire créée vers l'autorité de certification 12 concernée. Le contenu de la demande de certification correspond à celui de la requête de certification unitaire ; seule sa structure est modifiée de manière à être adaptée aux moyens de communication utilisés pour connecter l'autorité locale d'enregistrement 5 à l'autorité de certification 12. La demande de certification est signée par la clé privée de l'autorité locale d'enregistrement 5 de manière à garantir l'origine de la demande. Le statut de chaque requête de certification est alors mis à jour ; l'autorité locale d'enregistrement 5 donne à l'attribut de la requête de certification unitaire relatif à l'état d'avancement de la procédure la valeur « émission d'une demande ». L'autorité de certification 12 stocke la demande. L'autorité de certification 12 est susceptible de produire à tout moment un certificat signé de sa clé privée. Le mode de connexion entre l'autorité de certification 12 et l'autorité locale d'enregistrement 5 est synchrone ou asynchrone. Dans un mode asynchrone, l'autorité locale d'enregistrement 5 comporte des moyens de traitement des certificats au fur et à mesure de leur réception.

Dans l'hypothèse où l'autorité de certification 12 ne parvient pas ou refuse de créer un certificat, il transmet un message d'erreur à l'autorité locale d'enregistrement 5. L'autorité locale d'enregistrement 5 modifie la valeur de l'attribut de la requête unitaire concernée relatif à l'état d'avancement de la certification pour lui donner la valeur « traitement terminé avec un message d'erreurs ».

Sur réception du certificat concerné, l'autorité locale d'enregistrement 5 modifie la valeur de l'attribut de la requête unitaire concernée relatif à l'état d'avancement de la certification pour lui donner la valeur « traitement terminé ». L'autorité locale d'enregistrement 5 détruit la requête de certification unitaire correspondante et crée un objet de type certificat dans la base de sécurité centrale 7.

Les sujets enregistrés dans la base de sécurité centrale 7, munis de paires de clés et dépourvus de certificats, ou pour lesquels un nouveau certificat a été demandé, ou pour lesquels leur certificat arrive à expiration dans le délai d'activation de l'autorité locale d'enregistrement 5, ou encore pour lesquels le certificat a été révoqué sont à l'aide du procédé selon l'invention munis automatiquement respectivement de certificats, de nouveaux certificats ou de certificats renouvelés.

L'interface homme/machine 4 du service central d'administration 3 est pourvue d'une fonction de suivi. La fonction de suivi permet à l'administrateur de suivre les différentes étapes du procédé selon l'invention et d'intervenir en cas de blocage survenant lors de la création ou de la certification d'une paire de clés. Lorsque l'administrateur le souhaite, il appelle la fonction de suivi de l'interface homme/machine 4 : la fonction de suivi recherche dans la base de sécurité centrale 7 toutes les requêtes unitaires en cours d'exécution et les communique à l'administrateur. L'administrateur peut surveiller à l'aide de la fonction de suivi de l'interface homme/machine l'attribut relatif à l'état d'avancement de la création d'une paire de clés ainsi que l'attribut relatif à l'état d'avancement de la certification. Lorsque l'attribut prend la valeur « traitement terminé avec un message d'erreurs », l'administrateur peut supprimer la requête concernée ou la relancer.

A tout moment, l'administrateur peut à l'aide de l'interface homme/machine 4 requérir la création d'une paire de clés et/ou la certification d'une paire de clés pour un sujet donné. Dans ce cas, le mécanisme de réveil 6 active l'autorité locale d'enregistrement dès la saisie de la demande de création et/ou de création et de certification par l'administrateur.

D'autres formes de réalisation du procédé et du système selon la présente invention sont susceptibles d'être conçues.

Ainsi, par exemple, l'autorité locale d'enregistrement 5 peut rechercher tous les sujets pour lesquels une paire de clés doit être réalisée puis rechercher les requêtes multiples associées.

Le procédé selon la présente invention consiste donc à :
- rechercher dans des moyens de mémorisation 7 au moins un sujet pour lequel une paire de clés asymétriques et un certificat associé doivent être créés ;
- créer au moins une requête unitaire de création et de certification d'une paire de clés asymétriques pour ledit sujet ;
- transmettre une demande correspondant à ladite requête unitaire de création et de certification à un centre de génération de clés 8 qui délivre une paire de clés asymétriques conformément à ladite demande ;
- créer au moins une requête unitaire de certification de la clé publique créée pour ledit sujet ;
- transmettre une demande correspondant à ladite requête unitaire de certification à une autorité de certification 12 qui délivre un certificat conformément à ladite demande.

Une paire de clés doit être créée pour un sujet donné lorsque ledit sujet est dépourvu de paire de clés et de requête unitaire de création et de certification correspondante, ou lorsqu'une une paire de clés a été requise pour ledit sujet, ou lorsque le certificat d'une paire de clés dudit sujet destinée à une utilisation identique a été révoqué et qu'une nouvelle paire de clés a été demandée.

Le procédé s'effectue de manière périodique.

Il crée chaque requête unitaire à partir d'une requête multiple de création et de certification correspondante enregistrée dans les moyens de mémorisation 7 relative à un ensemble de sujets appartenant à une liste préfixée ou à un ensemble de sujets défini par des critères prédéterminés ainsi qu'à des modèles de paires de clés et modèles de certificat associés pour l'ensemble en question.

Le procédé consiste à rechercher dans chacune des requêtes multiples de création et de certification du système, tous les sujets se trouvant dans une condition dans laquelle une paire de clés doit être créée.

Le procédé selon la présente invention consiste également à :
- rechercher dans des moyens de mémorisation 7 au moins une paire de clés asymétriques pour lequel un certificat doit être créé ;
- créer au moins une requête unitaire de certification de la clé publique ;
- transmettre une demande correspondant à ladite requête unitaire de certification à une autorité de certification 12 qui délivre un certificat conformément à ladite demande.

Un certificat doit être créé pour un sujet donné lorsque ledit sujet est dépourvu de certificat et de requête unitaire de certification, ou lorsqu'un certificat a été requis pour ledit sujet, ou lorsque le certificat d'une paire de clés dudit sujet arrive à expiration, ou lorsque le certificat d'une paire de clés a été révoqué.

Le procédé s'effectue de manière périodique.

Un certificat doit être créé pour un sujet donné lorsque le certificat arrive à expiration dans ladite période.

Le procédé crée chaque requête unitaire à partir d'une requête multiple de certification correspondante enregistrée dans les moyens de mémorisation 7 relative à un ensemble de paires de clés de sujets appartenant à une liste préfixée ou à un ensemble de paires de clés de sujets défini par des critères prédéterminés ainsi qu'à des modèles de certificat associés pour l'ensemble en question.

Le procédé consiste à rechercher dans chacune des requêtes multiples de certification du système, tous les sujets se trouvant dans une condition dans laquelle un certificat doit être créé.

Chaque requête multiple comprend un attribut relatif à au moins une date d'exécution et le procédé selon l'invention consiste à ne retenir dans la recherche que les requêtes multiples dont la date d'exécution est atteinte.

Le procédé selon l'invention consiste à réaliser l'encodage d'une ou plusieurs extensions selon une ou des règles déterminées et à introduire l'extension ou les extensions encodées dans la requête unitaire de certification lors de la création de celle-ci.

Il consiste également à modifier la valeur d'un attribut contenu dans chacune des requêtes unitaires pour en indiquer l'état d'avancement.

La présente invention concerne également le système informatique 1 permettant de créer et gérer des objets et notamment des paires de clés cryptographiques asymétriques et des certificats associés aux paires de clés, les paires de clés et les certificats étant destinés à des sujets gérés par ledit système, caractérisé en ce qu'il comprend des moyens permettant d'automatiser la création et/ou la certification d'au moins une paire de clés pour chaque sujet géré par le système 1.

Le système 1 comprend au moins :
- un service central d'administration 3 apte à créer, mettre à jour et consulter les objets et les sujets gérés par ledit système ;
- une autorité locale d'enregistrement 5 apte à gérer la création et/ou la certification de clés destinés à un objet ;
- une base de sécurité centrale 7 contenant les sujets et objets gérés par le système avec laquelle l'autorité locale d'enregistrement communique ;
- un centre de génération de clés 8 apte à créer au moins une paire de clés sur requête de l'autorité locale d'enregistrement 5 avec laquelle il communique ;
le système 1 disposant d'au moins une autorité de certification 12 apte à créer un certificat sur requête de l'autorité locale d'enregistrement 5.

Il comprend un mécanisme de réveil périodique 6 de l'autorité locale d'enregistrement 5.

La présente invention concerne également un procédé de création et de gestion de clés cryptographiques symétriques, chaque clé étant destinée à un sujet géré par un système informatique 1, caractérisé en ce qu'il consiste à :
- rechercher dans des moyens de mémorisation 7 au moins un sujet pour lequel une clé symétrique doit être créée ;
- créer au moins une requête unitaire de création d'une clé symétrique pour ledit sujet ;
- transmettre une demande correspondant à ladite requête unitaire de création à un centre de génération de clés 8 qui délivre une clé symétrique conformément à ladite demande.

Elle porte sur le système informatique 1 permettant de créer et gérer des objets et notamment des clés cryptographiques symétriques, les clés étant destinés à des sujets gérés par ledit système, caractérisé en ce qu'il comprend des moyens permettant d'automatiser la création d'au moins une clé pour chaque sujet géré par le système 1.

De cette manière, le procédé et le système selon la présente invention permettent de créer et gérer automatiquement des clés cryptographiques et leurs certificats associés dans le cas de clés asymétriques. Ils permettent également d'éviter d'avoir à créer des requêtes unitaires pour chaque utilisateur et de soulager ainsi le travail de l'administrateur. Les requêtes multiples simplifient la création et la gestion des clés publiques/privées.

La gestion de la certification des clés publiques est assurée malgré la communication en mode asynchrone de l'autorité de certification 12 avec le serveur 2.

Le délai d'expiration des certificats est surveillé de manière à assurer un renouvellement automatique des certificats.

Les extensions sont traitées par le système 1.

Le suivi des créations et certifications de paires de clés est possible à l'aide du service central d'administration et plus particulièrement de l'interface homme/machine.

## Revendications

1. Procédé de création et de gestion de paires de clés cryptographiques asymétriques et certificats associés, chaque paire de clés étant destinée à un sujet géré par un système informatique (1), caractérisé en ce qu'il consiste à :
• rechercher dans des moyens de mémorisation (7) au moins un sujet pour lequel une paire de clés asymétriques et un certificat associé doivent être créés ;
• créer au moins une requête unitaire de création et de certification d'une paire de clés asymétriques pour ledit sujet ;
• transmettre une demande correspondant à ladite requête unitaire de création et de certification à un centre de génération de clés (8) qui délivre une paire de clés asymétriques conformément à ladite demande ;
• créer au moins une requête unitaire de certification de la clé publique créée pour ledit sujet ;
• transmettre une demande correspondant à ladite requête unitaire de certification à une autorité de certification (12) qui délivre un certificat conformément à ladite demande.

2. Procédé selon la revendication 1, caractérisé en ce qu'une paire de clés doit être créée pour un sujet donné lorsque ledit sujet est dépourvu de paire de clés et de requête unitaire de création et de certification correspondante, ou lorsqu'une paire de clés a été requise pour ledit sujet ou lorsque le certificat d'une paire de clés dudit sujet destinée à une utilisation identique a été révoqué et qu'une nouvelle paire de clés a été demandée.

3. Procédé selon l'une des revendications 1 ou 2, caractérisé en ce qu'il s'effectue de manière périodique.

4. Procédé selon l'une des revendications 1 à 3, caractérisé en ce qu'il crée chaque requête unitaire à partir d'une requête multiple de création et de certification correspondante enregistrée dans les moyens de mémorisation (7) relative à un ensemble de sujets appartenant à une liste préfixée ou à un ensemble de sujets défini par des critères prédéterminés ainsi qu'à des modèles de paires de clés et modèles de certificat associés pour l'ensemble en question.

5. Procédé selon la revendication 4, caractérisé en ce qu'il consiste à rechercher dans chacune des requêtes multiples de création et de certification du système, tous les sujets se trouvant dans une condition dans laquelle une paire de clés doit être créée.

6. Procédé de création et de gestion de certificats de paires de clés cryptographiques asymétriques, chaque certificat étant destiné à une paire de clés cryptographiques asymétriques d'un sujet géré par un système informatique (1), caractérisé en ce qu'il consiste à :
• rechercher dans des moyens de mémorisation (7) au moins une paire de clés asymétriques pour la clé publique de laquelle un certificat doit être créé ;
• créer au moins une requête unitaire de certification de la clé publique ;
• transmettre une demande correspondant à ladite requête unitaire de certification à une autorité de certification (12) qui délivre un certificat conformément à ladite demande.

7. Procédé selon la revendication 6, caractérisé en ce qu'un certificat doit être créé pour un sujet donné lorsque ledit sujet est dépourvu de certificat et de requête unitaire de certification, ou lorsqu'un certificat a été requis pour ledit sujet, ou lorsque le certificat d'une paire de clés dudit sujet arrive à expiration, ou lorsque le certificat d'une paire de clés a été révoqué.

8. Procédé selon l'une des revendications 6 ou 7, caractérisé en ce qu'il s'effectue de manière périodique.

9. Procédé selon les revendications 7 et 8, caractérisé en ce que qu'un certificat doit être créé pour un sujet donné lorsque le certificat arrive à expiration dans ladite période.

10. Procédé selon l'une des revendications 6 à 9, caractérisé en ce qu'il crée chaque requête unitaire à partir d'une requête multiple de certification correspondante enregistrée dans les moyens de mémorisation (7) relative à un ensemble de paires de clés de sujets appartenant à une liste préfixée ou à un ensemble de paires de clés de sujets défini par des critères prédéterminés ainsi qu'à des modèles de certificat associés pour l'ensemble en question.

11. Procédé selon la revendication 10, caractérisé en ce qu'il consiste à rechercher dans chacune des requêtes multiples de certification du système, tous les sujets se trouvant dans une condition dans laquelle un certificat doit être créé.

12. Procédé selon l'une des revendications 1 ou 6, caractérisé en ce que chaque requête multiple comprend un attribut relatif à au moins une date d'exécution et en ce que ledit procédé consiste à ne retenir dans la recherche que les requêtes multiples dont la date d'exécution est atteinte.

13. Procédé selon l'une des revendications 1 ou 6, caractérisé en ce qu'il consiste à réaliser l'encodage d'une ou plusieurs extensions selon une ou des règles déterminées et à introduire l'extension ou les extensions encodées dans la requête unitaire de certification lors de la création de celle-ci.

14. Procédé selon l'une des revendications 1 ou 6, caractérisé en ce qu'il consiste à modifier la valeur d'un attribut contenu dans chacune des requêtes unitaires pour en indiquer l'état d'avancement.

15. Système informatique (1) permettant de créer et gérer des objets et notamment des paires de clés cryptographiques asymétriques et des certificats associés aux paires de clés, les paires de clés et les certificats étant destinés à des sujets gérés par ledit système, caractérisé en ce qu'il comprend des moyens permettant d'automatiser la création et/ou la certification d'au moins une paire de clés pour chaque sujet géré par le système (1 ).

16. Système informatique (1) selon la revendication 15, caractérisé en ce qu'il comprend au moins :
• un service central d'administration (3) apte à créer, mettre à jour et consulter les objets et les sujets gérés par ledit système ;
• une autorité locale d'enregistrement (5) apte à gérer la création et/ou la certification de clés destinés à un objet ;
• une base de sécurité centrale (7) contenant les sujets et objets gérés par le système avec laquelle l'autorité locale d'enregistrement communique ;
• un centre de génération de clés (8) apte à créer au moins une paire de clés sur requête de l'autorité locale d'enregistrement (5) avec laquelle il communique ;
le système (1) disposant d'au moins une autorité de certification (12) apte à créer un certificat sur requête de l'autorité locale d'enregistrement (5).

17. Système informatique selon l'une des revendications 15 ou 16, caractérisé en ce qu'il comprend un mécanisme de réveil périodique (6) de l'autorité locale d'enregistrement (5).

18. Procédé de création et de gestion de clés cryptographiques symétriques, chaque clé étant destinée à un sujet géré par un système informatique (1), caractérisé en ce qu'il consiste à :
• rechercher dans des moyens de mémorisation (7) au moins un sujet pour lequel une clé symétrique doit être créée ;
• créer au moins une requête unitaire de création d'une clé symétrique pour ledit sujet ;
• transmettre une demande correspondant à ladite requête unitaire de création à un centre de génération de clés (8) qui délivre une clé symétrique conformément à ladite demande.

19. Système informatique (1) permettant de créer et gérer des objets et notamment des clés cryptographiques symétriques, les clés étant destinés à des sujets gérés par ledit système, caractérisé en ce qu'il comprend des moyens permettant d'automatiser la création d'au moins une clé pour chaque sujet géré par le système (1).
